# EUROPEAN PATENT APPLICATION

(11) **EP 0 597 152 A1**
(43) Date of publication of application: **18.05.1994**
(21) Application number: 92203488.9
(22) Date of filing: 13.11.1992
(51) Int. Cl.: G01N 21/05

(54) **Optimizing capillary flow cells**

(71) Applicant: Chervet, Jean-Pierre, NL-1057 HM Amsterdam (NL)
(72) Inventor: Chervet, Jean-Pierre, NL-1057 HM Amsterdam (NL)
(74) Representative: de Bruijn, Leendert C.

(57) **Abstract**

The sensitivity of capillary flow cells such as described in the European patent application nr. 90200691.5 has been substantially improved by optimizing the alignment of the longitudinal section (middle part) of the bent fused silica capillary, by increasing the aperture ratio (flow cell diameter/flow cell length) and by making use of fiber optics for light beam guiding and enhancing the light propagation through the capillary flow cell.

These improvements can be applied to any type of longitudinal flow cells including "Z" and "U" shaped capillary flow cells (Figure 1).

The alignment of the middle part [2] of the bent fused silica capillary [3,4] is no longer parallel to the optical axes but shows a deviation by angle ψ - (Figure 2). This angle is of the same value as the angle by which the light beam is refracted during its entrance into the capillary glass tubing and, therefore, compensates for loss in refracted light.

With aperture ratios (dc/Ic) of typically 1/260 the ratios are to far away from their optimum values of 1/10 to 1/5 and result in high noise levels.

By adapting the ratios to values closer to the optimum (e.g. 1/40) noise levels can be reduced substantially.

The use of fiber optics [6] allows for optimal light beam guiding to and from the capillary flow cell and increases the light throughput (Figure 3). Further it allows for placing the flow cell (sensing region) in distance to the detection device.

This invention relates to a capillary flow cell for use in microseparation techniques such as capillary liquid chromatography, supercritical fluid chromatography, capillary electroseparations (e.g., capillary zone electrophoresis, micellar electrokinetic capillary chromatography, electrochromatography) and related techniques and to a method for manufacturing capillary flow cells of improved sensitivity.

## Description

### Alignment optimization

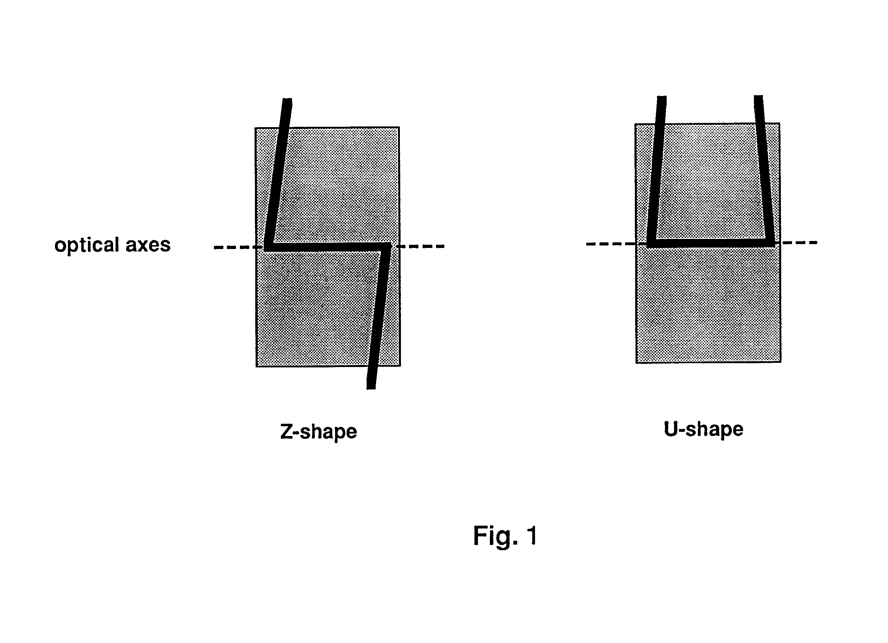

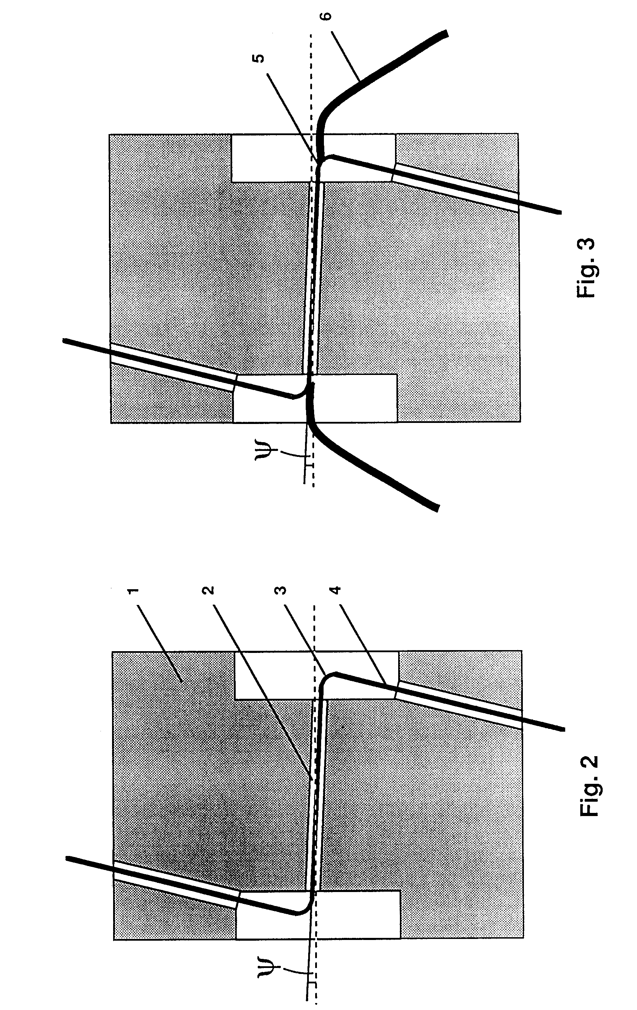

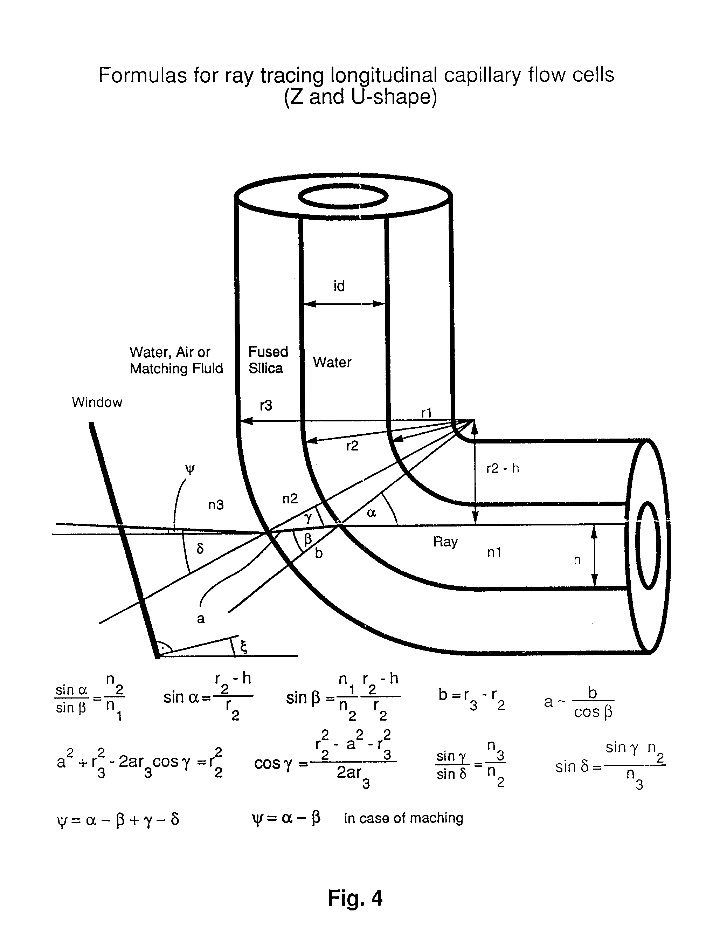

In Figure 4 the formulas for ray tracing of capillary flow cells are shown. The theoretical calculations illustrate that U shaped flow cells provide higher light transmission than Z shaped capillary flow cells owing to the entrance and exit angle 0. In practice, however, no difference in sensitivity between Z and U shaped flow cells could be observed. Correction for the reflection of the incident light beam was realized by drilling the bore [2] of the middle portion of the template [1] with angle 0 (Figure 2). The need for refractive index matching fluids (RIMF) was therefore eliminated.

### Aperture ratio optimization

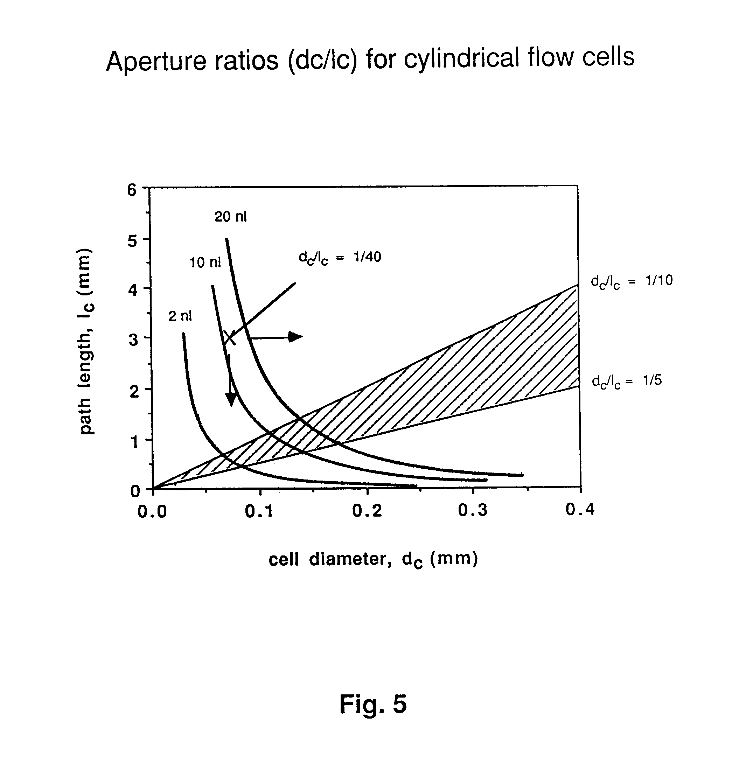

Figure 5 shows the aperture ratios (dc/Ic) for cylindrical flow cells with volumes ranging from 2 to 20 nl. Both Z and U shaped capillary flow cells can be considered as cylindrical cells and should be constructed with respect to the optimal aperture ratio, shown by the shaded area in Figure 5 and the arrows indicating the directions for aperture optimization. For highest sensitivity the optical aperture (dc/Ic) should have numbers within the range of 1/10 to 1/5. For values below 1/10 the utilizable light energy rapidly decreases, resulting in increased noise and poor linearity. For values above 1/5 the path length becomes to short, resulting in poor sensitivity. With a ratio of ca. 1/40 achieved by using a 75 µm I.D. capillary of 3 mm path length, values closer to the optimal ratio of 1/10 result. The substantial decrease of 5 to 10 fold in noise from using flow cells with a path lengths 10 mm counterbalance the drawbacks of loosing some of the sensitivity (ca. factor 2) versus capillary flow cells of 20 mm path length. Further, the risk of zone overlap and dispersion in the longitudinal section of the capillary flow cell is significantly reduced with flow cells of shorter path length.

### Optimization of light propagation

The use of fiber optics can significantly enhance the propagation of the light beam through the capillary flow cell. Figure 3 shows a Z shaped capillary flow cell with an input and output optical fiber [6]. For highest light throughput the use of tapered fibers and direct attachment of the fibers onto the bends of the capillary using UV transparent glue [5] is recommended.

Further, the use of fiber optics allows the separation of the sensing region (flow cell) from the detection device which offers new types of applications, e.g. process monitoring, high temperature detection, etc.

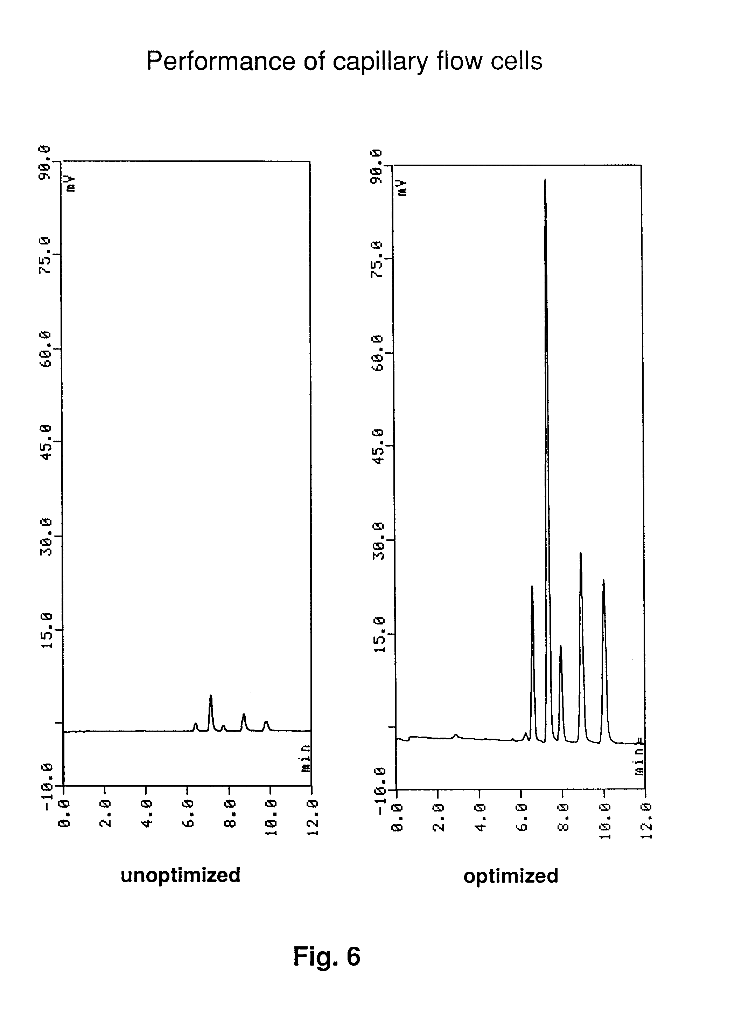

With these optimizations, the sensitivity of capillary flow cells in terms of signal to noise (S/N) values can be significantly improved. Figure 6 shows the comparison of a previous capillary flow cell and a U-shaped capillary flow cell with optimized entrance angle and optimized aperture ratio. Sensitivity enhancement of at least a factor of 10 and more are possible, resulting in lower limits of detection of the same magnitude.

## Claims

Making and optimizing longitudinal capillary flow cells that can be achieved either by: 1. Minimizing the amount of refracted light and consequently increasing the light throughput by either correcting the incident light beam by angle ψ (use of lenses) or by drilling the central bore of the template with a deviation of the same angle.

2. Increasing the sensitivity (in terms of S/N) by reducing the aperture ratio dc/Ic to values closer to the optimum of 1/10, by reducing the path length to values 10 mm.

3. Enhancing the light propagation through the flow cells by means of fiber optics, including the use of tapered fibers and UV transparent glue.
